# EUROPEAN PATENT APPLICATION

(11) **EP 0 803 218 A1**
(43) Date of publication of application: **29.10.1997**
(21) Application number: 96610015.8
(22) Date of filing: 22.04.1996
(51) Int. Cl.: A47J 27/16

(54) **A hot water or steam cooker**

(71) Applicant: CABINPLANT INTERNATIONAL A/S, DK-5683 Haarby (DK)
(72) Inventor: Andersen, Niels Jorgen, Brobyvaerk, DK-5672 Broby (DK)
(74) Representative: Nielsen, Henrik Sten

(57) **Abstract**

A hot water or steam cooker for cooking particulate food products like fish, meat, vegetables, shrimps or the like comprises a housing (10) in which a cooking department is defined. An apertured conveyor belt (18) is moved through the cooking compartment by means of a motor (46). A number of water inlet channels (30) and a number of water outlet channels (32) are positioned below the conveyor belt. The inlet channels communicate with a first reservoir (34) and the outlet channels communicate with a second reservoir (48). Between the first and second reservoirs, a return channel (52) is provided. For producing a forced circulation flow from the first reservoir through the conveyor belt and back to the second reservoir, a steam ejector (53) is provided.

## Description

The invention relates to an apparatus for water or steam cooking of particulate food products like, for example, fish, shrimps, meat, vegetables, transported through a cooking chamber by means of an essentially horisontal conveyor belt through which water or steam is flowing continuously in a recirculation cycle.

Various cookers are known in the art, in particular the steam cookers for shrimp shown in U.S. Pat. Nos. 5,072,663, 4,862,792, 4,548,191, and 5,253,569, the disclosures of which are hereby incorporated by reference.

U.S. Pat. No. 5,253, 569 relates to a serpentine food processor and method for use in processing meat products, and more particularily, to circulation of air or other processing medium within the food processor. The transport of the food products is ensured by a serpentine chain conveyor which follows a vertically ascending and descending route and the recirculation of the processing medium is achieved by means of a blower.

The use in the apparatus of the prior art of a plurality of product carriers which transport the product vertically up and down consists a limitation with regard to the possibilities of loading small, particulate products which may easily fall from the small carriers that transport them.

Common to the apparatuses of the previous art is their impossibility to unify the main requirements of simplicity of design and efficiency of the cooking process.

An object of the present invention is to provide a cooker constituting an improved cooker as compared to the prior art cookers.

A further object of the present invention is to provide a cooker constituting a cooker of a design and construction which is more simple than the design and contruction of the prior art cookers allowing a more simple function, an easy cleaning and also easy repair of the cooker provided repair is necessitated.

An advantage of the cooker according to the present invention is the low water and energy consumption of the cooker according to the present invention which provides a closed loop water circulation reducing the water consumption as compared to a cooker in which water is used only once and continuously substituted by the supply of water from a water supply such as a cold water supply and also provides a reduced energy consumption by the recirculation of the water instead of using fresh cold water.

A feature of the present invention relates to the fact that the apparatus according to the present invention allows reuse of water and recirculation of water without the necessity of elaborated filtering elements which might easily be blocked through particles originating from the particulate food product to be cooked in the cooker and further allows the recirculation of the water without the necessity of employing moving parts such as pumps etc.

A particular advantage of the present invention relates to the fact that the cooker according to the present invention includes no water flow restricting elements which might easily be blocked by particles originating from the particulate food product to be cooked by the cooker and which might be hard to clean properly after the use of the cooker.

The above objects, the above feature and the above advantages together with numerous other objects, features and advantages which will be evident from the below detailed description of preferred embodiments of the cooker according to the present invention are obtained by a hot water or steam cooker according to the present invention for cooking particulate food products like fish, meat, vegetables, shrimps or the like, comprising:
a housing means defining an inner space constituting a cooking compartment, and defining a food product inlet and a food product outlet communicating with the cooking compartment,
an apertured and segmented conveyor means defining a conveyor path, the apertured and segmented conveyor means extending within the inner space of the housing means from the food product inlet to the food product outlet along the conveyor path, the apertured and segmented conveyor means defining an upper surface for receiving the particulate food product at the food product inlet, for supporting the particulate food product while conveyed along the conveyor path through the cooking compartment and for discharging the particulate food product being cooked from the food product outlet, the apertured and segmented conveyor means defining an opposite lower surface, the apertured and segmented conveyor means defining a plurality of apertured segments extending transversely relative to the conveyor path, each apertured segment being separated from adjacent apertured segment by partition walls protruding upwardly from the upper surface of the conveyor means,
an inlet means supported by the housing means and constituting a first transverse channel means extending below the conveyor means for conducting hot water or steam to the lower surface of the conveyor means,
an outlet means supported by the housing means and constituting a second transverse channel means extending below the conveyor means for removing water from the lower side of the conveyor means, the outlet means being positioned downstreams relative to the inlet means, the inlet means and the outlet means being separated from one another by partition wall means extending transversely relative to the conveyor means and contacting and sealing against the lower surface of the apertured and segmented conveyor means,
a first reservoir means supported by the housing means and communicating with the inlet means for supplying hot water or steam to the inlet means,
a second reservoir means supported by the housing means and communicating with the outlet means for receiving water therefrom,
a return channel means supported by the housing means and communicating with the first reservoir means and the second reservoir means for transferring water from the second reservoir means to the first reservoir means, the return channel means constituting an unrestricted flow channel, and
a hot water or steam ejector means supported by the housing means and communicating with the return channel means for ejecting hot water or steam into the return channel means towards the first reservoir means so as to force water to be returned from the second reservoir means to the first reservoir means through the ejection of hot water or steam into the return channel means so as to cause hot water or steam to flow from the first reservoir means, through the inlet means to the lower surface of the apertured and segmented conveyor means, and further upwardly through segments of the apertured and segmented conveyor means positioned above the first channel means for contacting the hot water or steam with the particulate food products supported by the segments, and so as to drain water from segments of the apertured and segmented conveyor means positioned above the second channel means through the apertures thereof to the outlet means and further to the second reservoir means, providing a closed loop hot water or steam circuit.

According to the basic teachings of the present invention, a closed loop hot water or steam circuit is established which is composed of an inlet branch and an outlet branch. The inlet branch compring the first reservoir means and the inlet means and the outlet branch comprises the outlet means and the second reservoir means. The first and second branches are bridged by the apertured and segmented conveyor means which allows the hot water or steam supplied to the lower surface of the conveyor means through the inlet means to flow upwardly through those segments of the conveyor means positioned above the first channel means, i.e. above the inlet means, and which allows water to be drained from those segments positioned above the second channel means i.e. above the outlet means to the second reservoir means. It is to be realized that the conveyor means which may be operated continuously or intermittingly shifts segments from a position above the inlet means to a position above the outlet means and consequently from letting hot water or steam be contacted with the particulate food products supported by the conveyor means above the inlet means into draining water from the particulate food products supported by the conveyor means above the outlet means.

According to a particular feature of the present invention, the inlet and outlet means constituting first and second transfer channel means, respectively, and also the return channel constitute unrestricted flow channels meaning that the channels are channels of a fairly large cross-section as compared to e.g. a conventional water pipe which in the present context is to be considered a restricted flow channel. By the provision of all water conducting elements or means as unrestricted flow channels, i.e. channels of fairly large cross-sections, an unrestricted flow of water including hot water and steam is established. Furthermore, through the provision of unrestricted flow channels, the process of cleaning the cooker after use is highly simplified as compared to a process of cleaning a cooker of the prior art including pipes, hoses and filter elements etc.

The apertured and segmented conveyor means of the cooker according to the present invention may constitute a conveyor means which allows a batch of particulate food products to be processed at a time, however, the apertured and segmented conveyor means preferably constitutes a closed loop conveyor means allowing continuous or intermittent operation of the overall cooker and defining a return path from said food product outlet to said food product inlet extending within or alternatively outside the inner space of the housing means.

The operation of cooking the particulate food product to be cooked in the cooker according to the present invention may be controlled in numerous ways, e.g. through altering the supply of steam or hot water to the cooker, however, according to a presently preferred embodiment of the cooker according to the present invention, the apertured and segmented conveyor means comprises a controllable motor means and an apertured and segmented conveyor belt propelled along the conveyor path by the controllable motor means allowing the time of transfer from the food product inlet to the food product outlet through the cooking compartment to be controlled by controlling the controllable motor means, so as to control the time of cooking of the particulate food products.

The inlet means and the outlet means of the cooker according to the present invention may be constituted by simple inlet and outlet channels extending transversely relative to the conveyor means or conveyor belt. The inlet channel of course is positioned upstreams relative to the outlet channel allowing the proper operation of the cooker as described above. According to the presently preferred embodiment of the cooker according to the present invention, the inlet means comprises a first plurality of individual transverse channels extending below the conveyor means and each communicating at one end with the first reservoir means, the outlet means comprises a second plurality of individual transverse channels extending below the conveyor means and communicating at one end with the second reservoir means, the transverse channels of the first plurality being positioned alternating with the transverse channels of the second plurality.

Although the number of individual transverse channels constituting the inlet means and the outlet means may be different fulfilling the above requirement that the transverse channels are positioned alternating, the number of transverse inlet channels and the number of transverse outlet channels are preferably identical.

In order to improve the distribution of hot water or steam to the particulate food products supported by the conveyor means above those segments of the conveyor means positioned above the inlet means, the channels of the first plurality of individual transverse channels constituting the inlet means preferably slope towards the first reservoir means and similarly the channels of the second plurality, i.e. the transverse channels constituting the outlet means preferably slope towards the second reservoir means for improving the draining of water from the particulate food product supported by those segments of the conveyor means positioned above the outlet means.

The reservoir means, i.e. the first and the second reservoir means of the cooker according to the present invention, may be positioned in any appropriate position relative to the apertured and segmented conveyor means such as above or below or alternatively at one side of the conveyor means. According to the presenly preferred embodiment of the cooker according to the present invention, the first reservoir means extends lengthwise along the conveyor path within the cooking compartment at a first side of the conveyor means and the second reservoir means extends lengthwise along the conveyor path within the cooking compartment along a second side of the conveyor means, the channels of the first plurality communicating with the first reservoir means at the first side of the conveyor means and the channels of the second plurality communicating with the second reservoir means at the second side of the conveyor means.

According to the above described presently preferred embodiment of the cooker according to the present invention, the return channel means extends below the conveyor means from the second side thereof to the first side thereof.

The individual components of the cooker are to be produced from materials allowing on the one hand the particulate food products to be cooked within the cooker and on the other hand constitute biologically and veterinary acceptable materials. Advantageous materials constitute aluminum, stainless steel and veterinary acceptable plastics materials suchs as polyethylene and polypropylene. According to the above realization, the housing means of the cooker according to the present invention along with the inlet means, the outlet means, the first reservoir means, the second means, the return channel means and the hot water or steam ejector means are preferably made from stainless steel whereas the conveyor means are preferably composed of individual apertured segments made from polyethylene or polypropylene or alternatively stainless steel.

Dependent on the actual food products to be cooked or otherwise processed in the cooker according to the present invention and also dependent on the energy consumption and the cooking time, the closed loop recycling of water from the second reservoir means to the first reservoir means may be accelerated through the provision of a water return pump means communicating with the first reservoir means and the second reservoir means for pumping water from the second reservoir means to the first reservoir means.

According to a specific characteristic of the cooker according to the present invention, the apertured and segmented conveyor means is through the provision of the partition wall means extending transversely relative to the conveyor means divided into a first set of segments positioned above the inlet means and a second set of segments positioned above the outlet means which first set is supplied with hot water or steam from the inlet means whereas water is drained from the second set of segments through the outlet means. In order to provide a separation of the first and second sets of segments each of the apertured segments of the apertured and segmented conveyor means preferably defines a specific width along the conveyor path and a partition wall preferably defines a spacing between the first reservoir means and the second reservoir means being no less than the width of each of the apertured segments.
Fig. 1 is a partial cutaway and perspective view of a preferred embodiment of a conveyor belt cooker according to the present invention comprising a conveyor belt system and water ingression and discharge compartments and including a combined pump and steam ejector system,
Fig. 2 is a partial offset cross-sectional end view of the cooker of Fig. 1 taken along the line VI-VI of Fig. 5, however only including a steam ejector,
Fig. 3 is a partial cross-sectional side view of the cooker of Figs. 1 and 2 taken along the line III-III of Fig. 1,
Fig. 4 is a cross-sectional top view of the cooker of Figs. 1-3 taken along the line IV-IV of Fig. 3,
Fig. 5 is a side view of the cooker of Figs. 1-4 illustrating in phantom lines the position of the conveyor belt system and the ingression and the discharge compartments,
Fig. 6 is a vertical sectional view of the cooker of Figs. 1-5 taken along line VI-VI of Fig. 5,
Fig. 7 is a perspective and partially broken-away view of the conveyor belt of the invention, and
Fig. 8 is an electrical diagrammatical view of a control circuit of an alternative embodiment of the cooker according to the present invention.

Now with reference to the accompanying drawing, the features and operation characteristics of the invention will be described in more detail. The apparatus according to the present invention is a cooking apparatus or a so-called cooker including a conveyor belt system by means of which particulate material, such as shrimps, are moved through a cooking chamber of the cooker and kept for a specific period of time within the cooking chamber determining the cooking time of the particulate product in question. The cooker illustrated in the drawings constitutes a presently preferred embodiment of a cooker according to the present invention and is designated the reference numeral 10 in its entirety.

The apparatus 10 comprises a housing 6 which is composed of side walls 7 and 9 and a top cover 8 and defines a proximal end 12 and an opposite distal end 14 for receiving the particulate material, such as shrimps, to be cooked within the above mentioned cooking chamber defined within the housing 6 and for discharging or delivering the cooked particulate material, respectively. It is to be realized that the apparatus constituting a conveyor belt cooker may be used for various food processing operations such as cooking, boiling, steam treatment, cooling, or treatment by a fluid composition of the particulate food product to be processed by means of the apparatus according to the present invention.

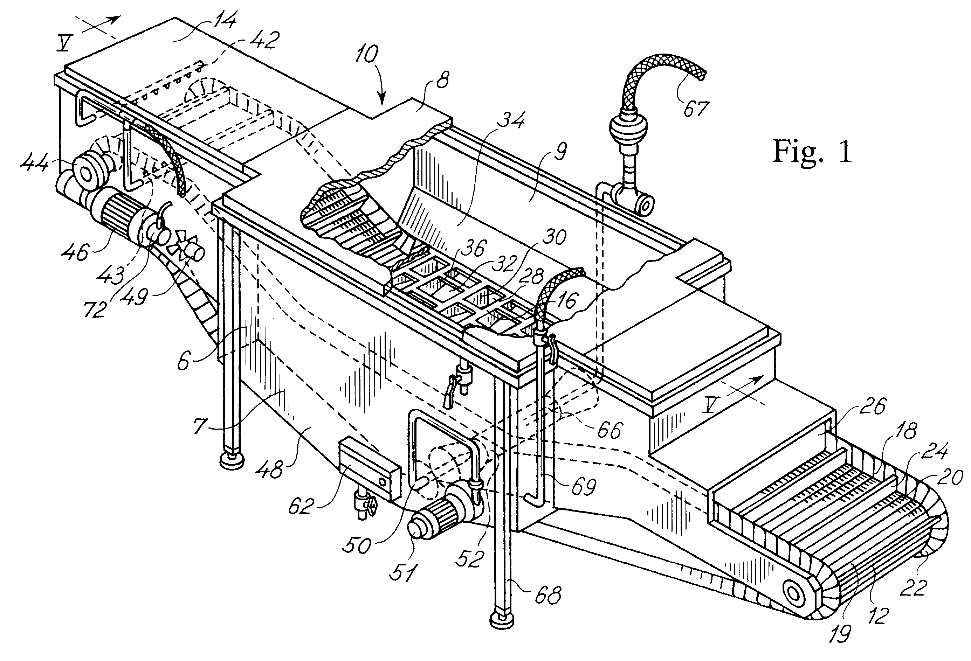

As seen in Fig. 1, a product to be cooked, such as shrimps, is loaded on the endless conveyor belt 18 at the proximal or entrance end 12 for transport through the interior space of the housing 6 of the apparatus 10 in which interior space the product is moved towards the distal or output end 14. Rows of spaced flights 24 bordered by overlapping side plates 22 which prevent the product from falling over the sides of the conveyor belt 18 are provided solidary with the conveyor belt 18 for preventing the product from rolling down the belt on inclined pathways. The transversal, parallel flights 24 and the longitudinal, overlapping plates 22 define a rectangular enclosure. The endless conveyor belt 18 comprises belt elements 19 wherein series of slits 20 are provided which allow the passage of water.

The conveyor belt 18 is preferably made of plastic material, such as PP or PE, dependent on the thermal load, to reduce loss of steam energy usually expended in heating a metal belt. However, if high temperature overheated steam is ejected and directed to the cooking chamber 36 through the belt elements 19 then the conveyor belt 18 may alternatively be made of a stainless metal, such as stainless steel, optionally provided with a coating, e.g. Teflon. The cooking chamber 36 is longitudinally bordered by a pressure chamber 34 constituting a water or steam supply chamber and a suction chamber 48 constituting a water or steam collecting chamber and vertical wing plates 26 attached to the proximal and the distal ends of the top cover 8 fit transversally into the rectangular enclosure, thus preventing the influx of air inside the cooking chamber. Between the pressure chamber 34 and the suction chamber 48 lie a series of alternating water ingression 30 and discharge 32 compartments covered by a perforated plate 16 provided with holes 28 and supporting the conveyor belt 18. Characteristic of the ingression and the discharge compartments are sets of inclined troughs 54 and 56, respectively.

At the distal end 14 the endless conveyor belt 18 articulates around a roller 44, thus reversing the direction and orientation of the belt and delivering the cooked food products to another processing device after they have previously been washed close to the end of the cooker by means of cold water sprayed from a multiple nozzle shower pipe 42. The conveyor belt 18, the pressure 34 and the suction chamber 48 and the communication channel 52 are contained in the housing 6 covered by the top cover 8 and resting on four supporting pillars 68. Apart from the multiple nozzle shower pipe 42 a further multiple nozzle shower pipe 43 is provided for spraying water onto the lower side of the conveyor belt 18 is moved along the return path from the distal end 18 towards the proximal end 12. Thus, the multiple nozzle shower pipe 43 serves the purpose of spraying water upwardly towards the conveyor belt 18 for rinsing the downwardly facing outer surface of the conveyor belt 18.

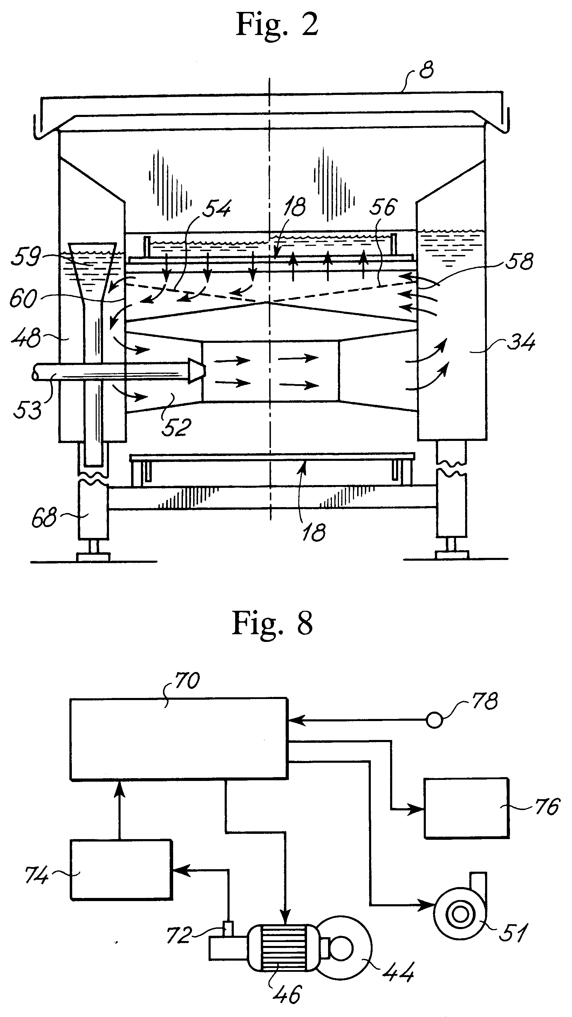

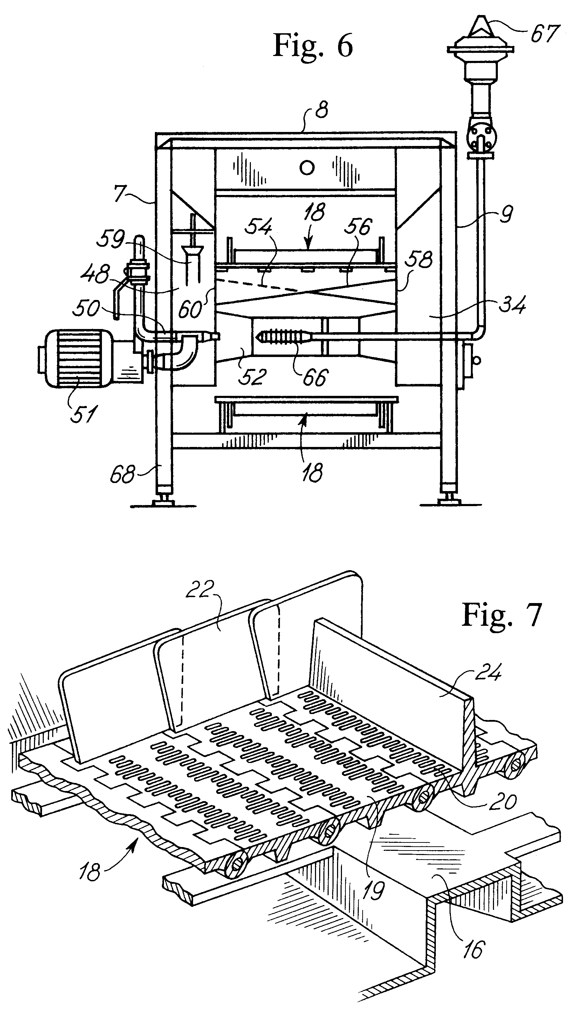

The principle of the invention is based upon the continuous circulation of water or steam between two chambers, the pressure and the discharge chambers, 34 and 48, respectively, on the upper side from the pressure chamber to the discharge chamber through sets of ingression and discharge compartments, 30 and 32, respectively, and on the lower side through a communication channel 52. The upper side filling of the discharge chamber is carried out by means of gravity forces and thanks to the particular form of the ingression and discharge compartments, whilst the flow of water on the lower side from the lower water level discharge chamber 48 to the higher water level pressure chamber 34 is ensured by means of a steam ejector such as a steam ejector 53 shown in Fig. 2 or alternatively a water pump such as a pump 51 shown in Figs. 1 and 6 and pumping water from the low water level discharge chamber 48 and injecting the water into the channel 52 through a pipe 50 and preferably in combination with a steam ejector also shown in Figs. 1 and 6 and designated the reference numeral 66 and receiving high pressure steam through a steam supply tube 67. The more detailed description of the flow cycle will follow hereinafter.

In Figs. 1 and 2, a water supply tube 69 and a overflow tube 59, respectively, are shown serving the purpose of initially supplying water to the cooker and defining a maximum water level within the low water level discharge chamber 48, respectively.

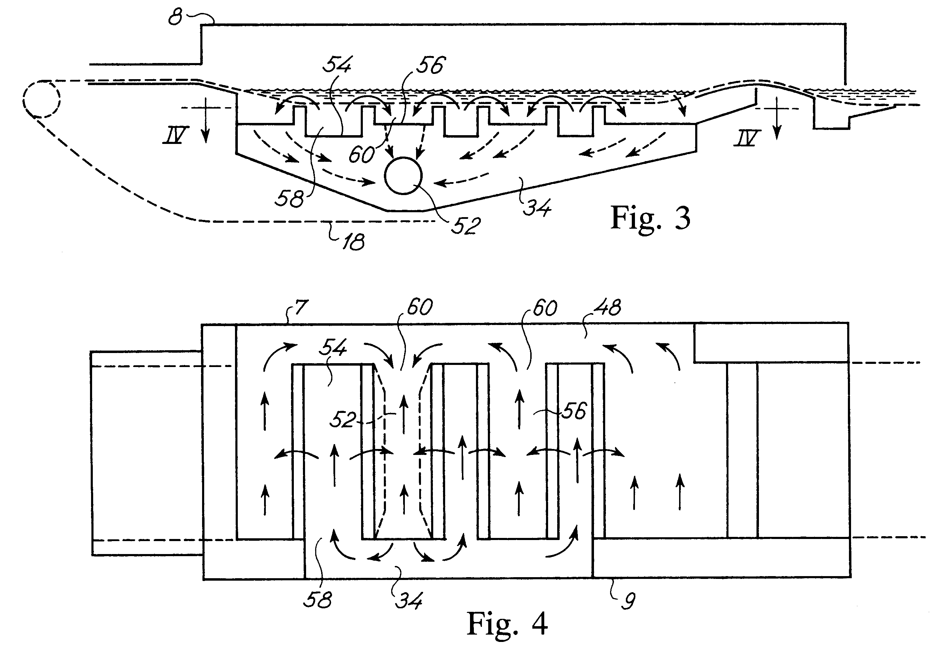

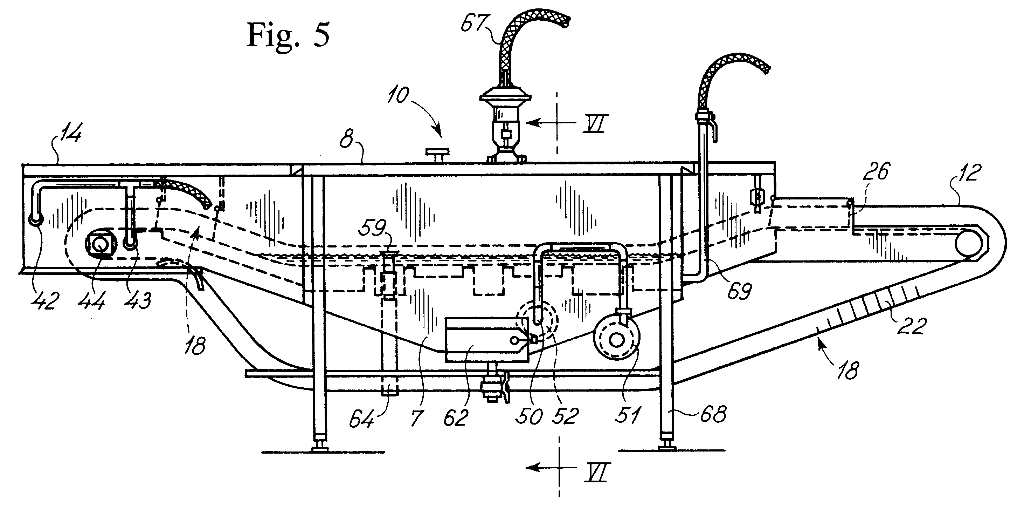

Hot water from the pressure chamber 34 is seen in Fig. 2 to transversally invade the ingression compartments 30 through ingression side apertures 58 (the form of which is better seen in Figs. 3 and 5) and rise through the holes 28 in the perforated plate 16 and the slits 20 in the belt elements 19 to the hot water level in the pressure chamber 34 in accordance with the principle of communicating vessels. The special form of the trough, inclined toward the pressure chamber 34, enables the creation of a wider ingression section in the side walls of the ingression compartment which in turn allows a larger amount of water to flow into the ingression compartment 30.

The conveyor belt movement takes the mixture of hot water and product from the rectangular section enclosed between two successive flights 24 and the overlapping side plates 22 above the ingression compartment 30 to the next compartment 32 which, being a discharge compartment, allows the hot water that has washed the food products to flow through the slits 20 in the belt elements 19, the holes 28 in the perforated plate 16, and finally down the discharge troughs 56 through the discharge side apertures 60 (the form of which is better seen in Figs. 3 and 5) in the suction chamber 48. The free flow of water is made possible by the special form of the trough which is inclined from the pressure chamber 34 downward to the suction chamber 48. This process of ingression-discharge is repeated as many times as there are provided sets of ingression-discharge compartments 30 and 32 and a supplementary illustration thereof seen from the side and from the top is presented in Figs. 3 and 4, respectively.

Fig. 3 is a partial, schematic, cross-sectional side view of the cooker of Figs. 1 and 2 taken along line III-III of Fig. 1, which gives a better picture of the alternating ingression and discharge side apertures 58 and 60, respectively. It is seen that the rectangular shapes of a shallow height correspond to the discharge compartments 32 and those of a greater height correspond to the ingression compartments 30. The continuous arrows symbolize the water ingression from the pressure chamber 34 into the ingression compartments 30 and the dashed arrows symbolise the flow of water from the suction chamber 48 towards the communication channel 52. Fig. 3 discloses also the position of the conveyor belt 18 relative to the water level.

Returning now to Fig. 2, it is seen that the water discharged from the discharge compartments 32 and received by the suction chamber 48 under the influence of the gravity forces flows through the communication channel 52 to the pressure chamber 34, thus closing the circulation cycle. The loss of water heat which occurs from the moment the hot water leaves the pressure chamber 34 is compensated for by the inclusion in the recirculation cycle of an ejector 50 which introduces in the recycled water flow through the communication channel 52 a jet of either hot water or hot steam and also propels the said jet of water or steam towards the pressure chamber 34 building up water pressure therein.

Fig. 4 which is a cross-sectional top view of the cooker of Fig. 3 taken along line IV-IV of Fig. 3 and illustrates the water flow from the pressure chamber 34 into the ingression compartments 30 and from the discharge compartment 32 into the suction chamber 48.

Fig. 5 is a side view of the cooker of Fig. 1 wherein the conveyor belt 18 and the ingression and the discharge compartments are represented by means of a dashed line. The conveyor belt 18 is also shown with an interior dashed line, and a further dashed line following on the exterior the contour of the conveyor belt dashed line shows the upper margin of the overlapping side plates 22 bordering the conveyor belt 18. Cold water from the multiple-nozzle shower pipe 42 cleans the food products just before they leave the conveyor belt 18. In the front plane, a drain 62 is provided for draining water from the cooker. The ejector pump 54 pumps recirculation water through the communication channel 52, also shown with dashed lines. The channel 52 comprises three sections: a concave entry section, a cylindrical central section, and a convex exit section, therefore the concentric dashed circles. The whole apparatus is mounted on four supporting pillars 68.

Fig. 6 is a sectional view of an alternative embodiment of a cooking apparatus similar to that of Fig. 5 taken along line VI-VI of Fig. 5.

Fig. 7 is a partially broken-away and perspective view of the conveyor belt of the invention showing in detail the assembly of the belt elements 19, the flights 24, the parrallel rows of slits 20, and the overlapping side plates 22. Fig. 7 provides also a detail of the conveyor belt-supporting perforated plate 16. The conveyor belt used in the invention is of a construction known in the art and generally available on the market.

As mentioned above, the cooking time is determined by the time of transportation of the particulate product in question through the cooking zone constituted by the cooking chamber 36 of the apparatus 10. Therefore, the rate of motion of the conveyor belt 18 is, in order to allow the cooking time to be adjusted to the product or material in question, adjustable, as the rotational speed of the motor 46 propelling the conveyor belt 18 through a gear assembly 47 constitutes/makes it an ajustable motor. In order to allow that the rotational motion or rotational speed of the motor 46 may be reused to an extremely low rotational speed, a separate cooling fan 49 is provided which is supplied with the mains voltage for causing the ventilating fan to rotate at the same speed, providing a specific amount of cooling air to the motor 46 irrespective of the rotational speed of the motor 46 which will constitute an AC or DC motor and in the presently preferred embodiment is a frequency control AC motor. For controlling the motor 46, the apparatus includes a frequency converter for converting the mains voltage of the mains frequency into an electric power supply signal of the mains voltage or an alternative voltage and of said specific frequency determined by the frequency converter.

In an alternative embodiment of the apparatus, the overall operation of the apparatus is controlled by a central processing unit as illustrated in Fig. 8 in which an electronic circuit diagram of the alternative embodiment is disclosed. Centrally, the electronic circuit includes the central processing unit 70 which may be constituted by a microprocessor and which controls the motor 46. By means of a detector 72, a countersignal in response to the rotational speed of the motor 46 is produced which is converted by means of a feedback block 74 and supplied to the central processing unit 70. The central processing unit block 70 further controls, as is evident from Fig.8, the ejector pump 51 and the additional functional elements of the overall apparatus, such as the rinsing of the cooked shrimps through a supply of rinsing water from the nozzle shower pipe 42. Furthermore, the central processing unit block 70 may control the supply of water to the suction chamber 48 through addressing a valve of the water inlet pipe, as shown in Fig. 1, and optionally any further operational function of the apparatus, as is illustrated by the block 76. For inputting control information into the central processing unit 70, an input terminal 78 is further provided.

It should, therefore, be evident that the present invention has improved the state of the art, providing both a considerably simpler construction and a more efficient process.

The cooker according to the present invention is believed to be characterized by the below relevant characteristics and properties:
1) The cooker is of an extremely simple structure. Furthermore, the function or operation of the cooker according to the present invention are very simple. The cleaning according to the present invention and also any repair work to be made on the cooker according to the present invention are extremely simple.
2) The cooker according to the present invention may be used for hot water and/or steam cooking and the cooker is easily modified from hot water to steam cooking through change of the supply of steam to the cooker through the steam ejector.
3) In steam cooking operation, the escape or emission of steam from the cooker is extremely small due to the forced circulation principle and also the sealing of the cooker relative to the environment.
4) The forced circulation of steam and/or hot water ensures a uniform heat treatment of the products to be cooked by means of the cooker.
5) The circulation of hot water or steam is generated through the pressure energy generated by the steam ejector. The alternative provision of the pump for generating water pressure is optional, still, the cooker according to the present invention exhibits only few if any mechanical components which are exposed to wear and also subjected to blocking by components from the food product to be cooked by the cooker.
6) The forced circulation flow is automatically or autonomously regulated in accordance with the product loading.
7) The cooker may be adapted to a particulate food product in an amount of 0.5 - 2 tons per hour at a cooking time of 60 sec. per product unit. Provided an extended cooking period is necessitated due to the nature of the product, a number of cookers according to the present invention may easily be positioned in a cascade configuration or alternatively, the rate of transportation of the conveyor belt may be reduced for increasing the cooking time. Also the cooker may itself be produced in any arbitrary size including any arbitrary number of water or steam ingression and discharge compartments.
8) The amount of water and energy consumed by the cooking process by using the cooker according to the present invention is very low as compared to conventional cookers using fresh heated water or steam for each individual cooking operation as the hot water or steam is circulated within the cooker according to the present invention and reused in the cooking operation. Due to the construction and design of the cooker including no constrictions subjected to blocking, no filtering of the water or steam is necessitated. However, provided the particulate food product in question necessitates the rinsing of the water in the recirculation process characteristic of the cooker according the present invention, filtering of the water may of course easily be established, e.g. in the return channel 52 or any other appropriate or advantageous location or position within the cooker.
9) The rinsing of the cooked particulate food product is established by ejecting cold rinsing water to the cooked products, however, alternatively, forced air cooling may be used alone or in combination with the cold water rinsing and cooling.
10) The cooker according to the present invention may easily be integrated in a food product processing line for processing particulate food products such as shrimps or any other delicate food products which cannot stand exposure to high pressure without being deteriorated.
11) The cooker may if necessary be insulated through applying external insulation to the housing of the cooker. The cooker may also be modified through the provision of rotating hot water or steam ejector nozzles within the cooker or any other nozzles ejecting processing fluid or cooling fluid to the particulate food product.
12) The cooker according to the present invention may easily be produced from corosion resistant product such as stainless steel and also veterinary acceptable plastics materials such as PE or PP.
13) The cooker according to the present invention need no elaborated central processing unit for controlling the overall operation of the apparatus as the forced hot water or steam circulation is self-controlling and since the processing time is simply determined by the rate of transportation of the particulate food product through the cooker.

It is recognized that various equivalents, alternatives and modifications are possible within the scope of the appended claims.

## Claims

1. A hot water or steam cooker for cooking particulate food products like fish, meat, vegetables, shrimps or the like, comprising:
a housing means defining an inner space constituting a cooking compartment, and defining a food product inlet and a food product outlet communicating with said cooking compartment,
an apertured and segmented conveyor means defining a conveyor path, said apertured and segmented conveyor means extending within said inner space of said housing means from said food product inlet to said food product outlet along said conveyor path, said apertured and segmented conveyor means defining an upper surface for receiving said particulate food product at said food product inlet, for supporting said particulate food product while conveyed along said conveyor path through said cooking compartment and for discharging said particulate food product being cooked from said food product outlet, said apertured and segmented conveyor means defining an opposite lower surface, said apertured and segmented conveyor means defining a plurality of apertured segments extending transversely relative to said conveyor path, each apertured segment being separated from adjacent apertured segment by partition walls protruding upwardly from said upper surface of said conveyor means,
an inlet means supported by said housing means and constituting a first transverse channel means extending below said conveyor means for conducting hot water or steam to said lower surface of said conveyor means,
an outlet means supported by said housing means and constituting a second transverse channel means extending below said conveyor means for removing water from said lower side of said conveyor means, said outlet means being positioned downstreams relative to said inlet means, said inlet means and said outlet means being separated from one another by partition wall means extending transversely relative to said conveyor means and contacting and sealing against said lower surface of said apertured and segmented conveyor means,
a first reservoir means supported by said housing means and communicating with said inlet means for supplying hot water or steam to said inlet means,
a second reservoir means supported by said housing means and communicating with said outlet means for receiving water therefrom,
a return channel means supported by said housing means and communicating with said first reservoir means and said second reservoir means for transferring water from said second reservoir means to said first reservoir means, said return channel means constituting an unrestricted flow channel, and
a hot water or steam ejector means supported by said housing means and communicating with said return channel means for ejecting hot water or steam into said return channel means towards said first reservoir means so as to force water to be returned from said second reservoir means to said first reservoir means through the ejection of hot water or steam into said return channel means so as to cause hot water or steam to flow from said first reservoir means, through said inlet means to said lower surface of said apertured and segmented conveyor means, and further upwardly through segments of said apertured and segmented conveyor means positioned above said first channel means for contacting said hot water or steam with said particulate food products supported by said segments, and so as to drain water from segments of said apertured and segmented conveyor means positioned above said second channel means through said apertures thereof to said outlet means and further to said second reservoir means, providing a closed loop hot water or steam circuit.

2. The cooker according to claim 1, said apertured and segmented conveyor means defining a closed loop conveyor means defining a return path from said food product outlet to said food product inlet extending within or alternatively outside said inner space of said housing means.

3. The cooker according to claim 1 or 2, said apertured and segmented conveyor means comprising a controllable motor means and an apertured and segmented conveyor belt propelled along said conveyor path by said controllable motor means allowing the time of transfer from said food product inlet to said food product outlet through said cooking compartment to be controlled by controlling said controllable motor means, so as to control the time of cooking of said particulate food products.

4. The cooker according to any of the claims 1-3, said inlet means comprising a first plurality of individual transverse channels extending below said conveyor means and each communicating at one end with said first reservoir means, said outlet means comprising a second plurality of individual transverse channels extending below said conveyor means and communicating at one end with said second reservoir means, said transverse channels of said first plurality being positioned alternating with said transverse channels of said second plurality.

5. The cooker according to claim 4, said first plurality and said second plurality being identical.

6. The cooker according to any of the claims 4 or 5, said channels of said first plurality sloping towards said first reservoir means and said channels of said second plurality sloping towards said second reservoir means.

7. The cooker according to any of the claims 4-6, said first reservoir means extending lengthwise along said conveyor path within said cooking compartment at a first side of said conveyor means and said second reservoir means extending lengthwise along said conveyor path within said cooking compartment along a second side of said conveyor means, said channels of said first plurality communicating with said first reservoir means at said first side of said conveyor means and said channels of said second plurality communicating with said second reservoir means at said second side of said conveyor means.

8. The cooker according to claim 7, said return channel means extending below said conveyor means from said second side thereof to said first side thereof.

9. The cooker according to any of the claims 1-8, said conveyor means being composed of individual apertured segments made from PE or PP or alternatively stainless steel.

10. A cooker according to any of the claims 1-9 further comprising a water return pump means communicating with said first reservoir means and said second reservoir means for pumping water from said second reservoir means to said first reservoir means.

11. A cooker according to any of the preceding claims, each of said apertured segments of said apertured and segmented conveyor means defining a specific width along said conveyor path and said partition wall defining a spacing between said first reservoir means and said second reservoir means being no less than said width of each of said apertured segments.
